# EUROPEAN PATENT APPLICATION

(11) **EP 3 951 489 A1**
(43) Date of publication of application: **09.02.2022**
(21) Application number: 20465551.8
(22) Date of filing: 04.08.2020
(51) Int. Cl.: G02F 1/1362, G02B 27/01

(54) **HEAD-UP DISPLAY UNIT ADAPTED TO HIGH BACKLIGHT INTENSITY**

(71) Applicant: Continental Automotive GmbH, 30165 Hannover (DE)
(72) Inventor: Pasca, Andrei - c/o Continental Automotive GmbH, 65824 Schwalbach a. Ts. (DE)
(74) Representative: Continental Corporation

(57) **Abstract**

The invention is directed to a head-up display unit adapted to high backlight intensity. The head-up display unit (1) comprises a picture generating unit (10) for creating an image to be displayed as a virtual image (VB) to a viewer and an optical unit (14) for projecting the image to be displayed towards an eyebox (4). The picture generating unit (10) comprises a liquid crystal layer (110), a backlight unit (13) arranged upstream the liquid crystal layer (110) and a colour filter (12) with a black matrix (1210) separating colour filter elements (120R, 120G, 120B) wherein the colour filter (12) is arranged downstream the backlight unit (13) and upstream the liquid crystal layer (110).

## Description

The present invention is related to a head-up display unit being adapted to high backlight intensity. A head-up display, also referred to as a HUD, is a display system in which the viewer can maintain his viewing direction, because the contents to be displayed are displayed in his field of vision. While such systems, due to their complexity and costs, were originally mainly used in the aviation sector, they are now also being used in large scale in the automotive sector, as they allow easy reading of critical information without the need to change the eye gaze from the road to an in-cabin instrument cluster.

Head-up displays generally consist of a picture generating unit (PGU), an optical unit and a mirror unit. The picture generating unit generates the image to be displayed. The optical unit directs the image to the mirror unit. The mirror unit is a partially reflecting, translucent pane, which reflects the light in such way that it reaches the so-called eyebox. The eyebox is an area whose height and width correspond to a theoretical viewing window. As long as an eye of the viewer is inside the eyebox, all elements of the virtual image are visible to the eye. If, on the other hand, the eye is outside the eyebox, the virtual image is only partially or not at all visible to the viewer. The larger the eyebox is, the less restricted the viewer is in his choice of sitting position.

The viewer sees the content displayed by the picture generating unit as a virtual image and at the same time the real world behind the translucent pane. In the automotive sector, the windscreen often serves as a mirror unit, the curved shape of which must be taken into account in the representation. However, the mirror unit may also be a dedicated screen, called combiner. Through the interaction of the optical unit and the mirror unit, the virtual image is an enlarged representation of the image generated by the picture generating unit.

The picture generating unit and the optical unit of a head-up display are typically arranged in a common housing assembly, which may also include electronic components necessary for operation of the head-up display. The housing assembly is sealed with a cover glass and protects the various components from damage as well as dust or other environmental influences. Furthermore, the housing assembly helps to simplify mounting of the head-up display in a vehicle, as all necessary components can be installed in a single production step.

An important requirement for head-up display applications is the necessary brightness of the virtual image, which needs to be in order of at least 5 000 cd/m², but preferably in the range 10 000 to 15 000 cd/m². Current head-up display solutions typically comprise a picture generating unit that uses a liquid crystal display (LCD) for creating the image to be displayed. In view of all the components that are placed in the optical path of the system, this high brightness requirement translates to a brightness requirement on the top surface of the display panel that is about five to ten times larger, i.e. 50 000 to 100 000 cd/m². Given the typical transmittance of an LCD panel of around 5 to 6%, this translates to a backlight requirement in the order of 1 000 000 to 2 000 000 cd/m². The high brightness requirements for the display lead to a series of problems when an LCD is used in a head-up display, which are mainly due to the low transmittance.

An issue caused by high brightness is that photo-induced electric currents are caused in semiconductor elements. These may cause malfunction.

US 2018/0321562 A1 relates to a so-called black matrix on array LCD that overcomes the issue of photo leakage current induced by backlight. One example has an array substrate and a colour filter substrate opposite to each other with a liquid crystal (LC) layer in-between. Another example has black matrices above and below the LC layer.

It is an object of the present invention to provide an improved solution for a head-up display with high brightness.

This object is achieved by a unit according to claim 1 or claim 7 and a vehicle according to claim 8. The dependent claims include advantageous further developments and improvements of the present principles as described below.

According to the invention, a head-up display unit is provided with a picture generating unit for creating an image to be displayed as a virtual image to a viewer and an optical unit for projecting the image to be displayed towards an eyebox wherein the picture generating unit comprises a liquid crystal layer, a backlight unit arranged upstream the liquid crystal layer, and a colour filter with a black matrix separating colour filter elements, wherein the colour filter is arranged downstream the backlight unit and upstream the liquid crystal layer. This has the advantage that the pixel driving elements of liquid-crystal layer are protected from bright light emitted by the backlight unit. The proposed solution is easy to produce, as the currently used stack of colour filter and liquid-crystal is just arranged in opposite order. A known process can be used where in just this stack is flipped.

Advantageously, the backlight unit emits highly collimated light. This has the advantage that the distance between black matrix and pixel driving elements does not matter, as highly collimated light does not reach the pixel driving elements, even if the black matrix is not directly applied but in a certain distance to the pixel driving elements. Advantageously, a conventionally used colour filter can be used, no expensive adaptation is necessary.

According to a preferred solution the liquid crystal layer is provided with pixel driving elements arranged facing the colour filter. This has the advantage that even a small amount of stray light from the backlight is prevented from reaching the pixel driving elements, thus increasing picture quality.

According to another inventive improvement, the liquid crystal layer and the colour filter are separated by a thin buffer layer. This has the advantage that negative effects of incompatible properties such as different thermal expansion, different chemical behaviour et cetera, of the two elements is avoided by separating them.

Advantageously a black matrix structure is arranged downstream the liquid crystal layer, said black matrix structure being provided with pixel apertures. This has the advantage that simple production process can be used, for example a process known for conventional HUD production, but with using a transparent film instead of colour filters. Another advantage is that due to the black matrix structure light shielding of external light is reached.

Preferably the pixel apertures are filled with at least one of an optically clear element, a colour filter element, or a polarizer element. An optically clear element has the advantage that the intensity of the light exiting the liquid-crystal display is not reduced. The advantage of applying colour filter element is that the colour of the light leaving the respective pixel can be further improved to be as close as possible to the desired colour of that pixel. The optically clear substance may, separately or in addition, have a polarising filter characteristic which advantageously omits the need of separate polarising filter.

A head-up display unit according to an aspect of the invention has a picture generating unit for creating an image to be displayed as a virtual image to a viewer and an optical unit for projecting the image to be displayed towards an eyebox, wherein the picture generating unit has a liquid crystal layer, a backlight unit arranged upstream the liquid crystal layer, a colour filter with a matrix separating colour filter elements, this matrix having an optical band-pass characteristic blocking frequencies that cause pixel driving elements to malfunction and letting pass other frequencies. This has as an advantage that even more useful light may pass, thus the use of a reduced brightness of the backlight is made possible or, with using a backlight of unchanged brightness, an increased over all brightness is reached.

According to one aspect of the invention, a vehicle comprises a head-up display unit according to the invention for generating an image for a user of the vehicle. The vehicle may, for example, be a car or an aircraft. Of course, the inventive solution can also be used in other environments or for other applications, e.g. in trucks, busses, in railway and public transport, cranes and construction machinery, etc.

Further features of the present invention will become apparent from the following description and the appended claims in conjunction with the figures.

### Figures

- Fig. 1: shows a sketch of a state-of-the-art head-up display for a motor vehicle;
- Fig. 2: shows a sketch of a head-up display according to the invention;
- Fig. 3: shows a simplified sketch similar to Fig.2;
- Fig. 4: shows a picture generating unit in a simplified diagrammatic view;
- Fig. 5: shows a known liquid crystal panel;
- Fig. 6: shows a liquid crystal panel according to the invention;
- Fig. 7: shows a simplified sketch similar to Fig.3;
- Fig. 8: shows another liquid crystal panel according to the invention;
- Fig. 9: shows a further liquid crystal panel according to the invention;
- Fig. 10: shows beam paths in a liquid crystal panel according to the invention;
- Fig. 11: shows beam paths in a liquid crystal panel according to the invention;
- Fig. 12: shows a further liquid crystal panel according to the invention;
- Fig. 13: shows a further liquid crystal panel according to the invention; and
- Fig. 14: shows beam paths in a liquid crystal panel according to the invention.

### Detailed description

For a better understanding of the principles of the present invention, embodiments of the invention will be explained in more detail below with reference to the figures. Like reference numerals are used in the figures for the same or equivalent elements and are not necessarily described again for each figure. It is to be understood that the invention is not limited to the illustrated embodiments and that the features described may also be combined or modified without departing from the scope of the invention as defined in the appended claims.

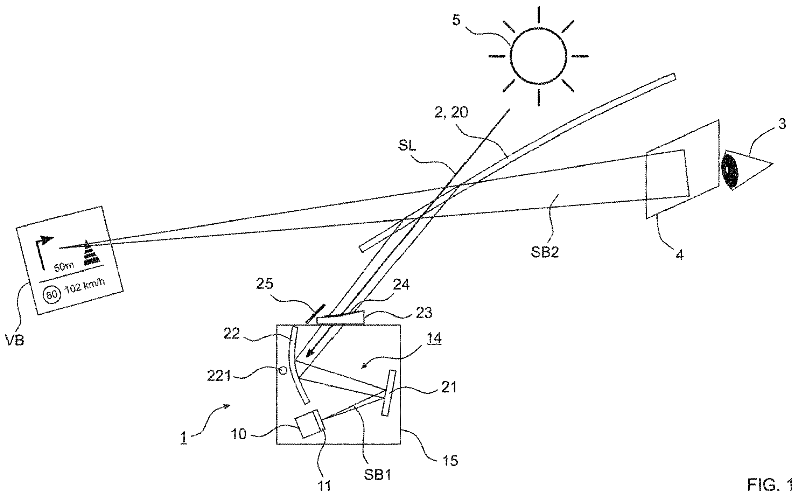

Fig. 1 shows a sketch of a state-of-the-art head-up display unit 1 for a motor vehicle. The head-up display unit 1 has a picture generating unit 10, an optical unit 14 and a mirror unit 2. A beam SB1 emanates from a liquid crystal display 11 of the picture generating unit 10 and is reflected by a folding mirror 21 onto a curved mirror 22, which reflects it in the direction of the mirror unit 2. The mirror unit 2 is shown here as a windscreen 20 of the motor vehicle. From there, the beam SB2 is directed towards the eye 3 of an observer.

The observer sees a virtual image VB, which is located outside the vehicle above the bonnet or even in front of the vehicle. Due to the interaction of the optical unit 14 and the mirror unit 2, the virtual image VB is an enlarged representation of the image displayed by the display 11. Here a symbolic speed limit, the current vehicle speed and navigation instructions are displayed. As long as the eye 3 is inside the eyebox 4 indicated by a rectangle, all elements of the virtual image VB are visible to the eye 3. If the eye 3 is located outside the eyebox 4, the virtual image VB is only partially or not at all visible to the viewer. The larger the eyebox 4 is, the less restricted the viewer is in his choice of the seating position.

The curvature of the curved mirror 22 is adapted to the curvature of the windscreen 20 and ensures that the image distortion is stable over the entire eyebox 4. The curved mirror 22 is rotatably supported by a bearing 221. By rotating the curved mirror 22, it is possible to shift the eyebox 4 and thus to adjust the position of the eyebox 4 to the position of the eye 3. The folding mirror 21 ensures that the distance travelled by the beam SB1 between the display 11 and the curved mirror 22 is long, while, at the same time, the optical unit 14 remains compact. The optical unit 14 and the picture generating unit 10 are accommodated in a housing assembly 15 and separated from the environment by a transparent cover 23. The optical elements of the optical unit 14 are thus protected, for example, against dust inside the vehicle. An optical foil or polarizer 24 can be located on the cover 23. The display 11 is typically polarized and the mirror unit 2 acts like an analyser. The purpose of the polarizer, or glare trap, 24 is to influence the amount of sunlight entering the head-up display. A light trap 25 serves to securely shield light reflected from the road or to block light from different sources placed at car height level so that it does not reach the observer. In addition to sunlight SL coming from the sun 5, also light from another source of interference might reach the display 11.

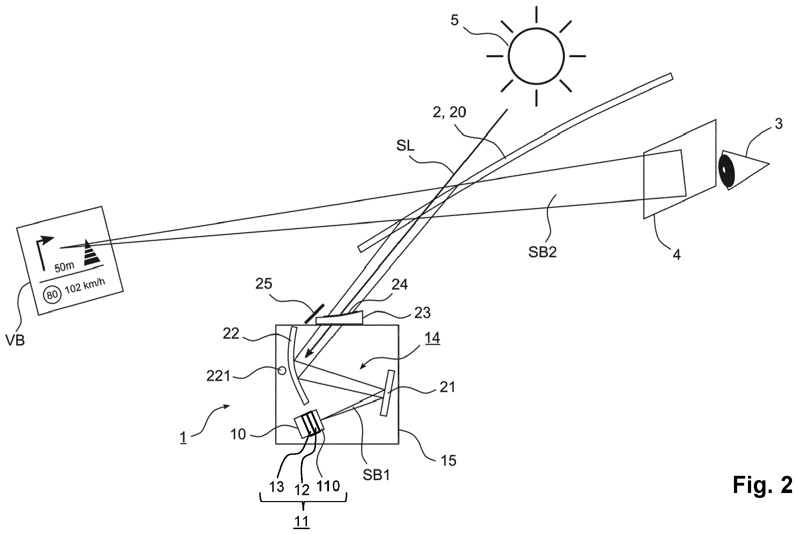

Fig. 2 shows a sketch of a head-up display according to the invention. The head-up display is similar to the head-up display of Fig. 1, but the liquid crystal display 11 is diagrammatically depicted as being provided with a liquid crystal layer 110, a backlight 13 and a colour filter 12 arranged therebetween.

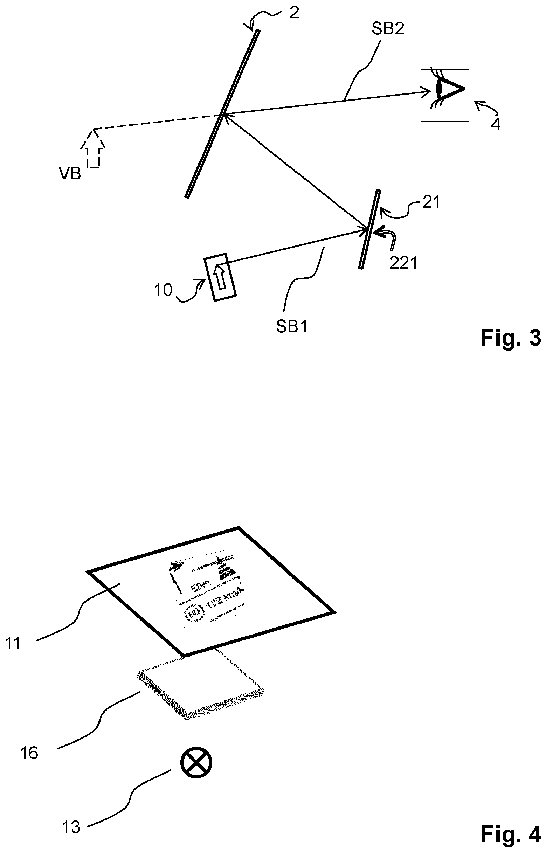

Fig.3 shows a simplified sketch similar to Fig.2. Here, only a single mirror, folding mirror 21 is shown. A Head-up Display, also referred to as HUD, is used to place information in the field of view of the user in such a way as to appear integrated in the surrounding environment. The intention is to provide the information in a way that does not require the user to significantly change the eye gaze direction and/or focus distance. HUDs are of particular importance in avionics and the automotive fields where they allow the vehicle's operator to glance important aspects of the trip without taking the eyes away from the path ahead. For this purpose, state of the art HUDs are required to deliver this information clearly discernible, independent of the ambient light level. This translates in high brightness requirements in excess of 10,000 cd/m² or even 15,000 cd/m² for the virtual image produced by the HUD. One of the preferred architectures for HUDs, as depicted in figure, comprises an image generating unit 10, an intermediate mirror, the folding mirror 21, and a transparent HUD screen, the mirror unit 2. As a note, this diagram should be understood as one of the possible embodiments and should not be regarded as restrictive to the present invention.

The image generating unit 10 is responsible for producing the symbols that shall be visible to the end user. The optical system from the depicted embodiment, consisting of the folding mirror 21 and the HUD screen, mirror unit 2, is designed in such a way as to produce a virtual image VB from the images generated by the generator unit 10 that are magnified and seen at a certain distance in front of the mirror unit 2. As a note, the mirror unit 2 is formed with the aid of an optically clear medium in order to not impede the visibility of the end user's environment. This mirror unit 2 may be a dedicated component, typically called combiner, or it may be formed as a region on the vehicle's windshield.

Fig. 4 shows the picture generating unit 10 in a simplified diagrammatic view. The light source illuminates via a light control structure 16 a liquid crystal display 11 on which an image is displayed that corresponds to the virtual image VB to be shown to the user. Given the topology of the optical system used to create the virtual image VB based on the images produced by the generator unit 10, the brightness of the symbols displayed by the image generating unit should be around five times larger than the required virtual image brightness. This translates in brightness levels in excess of 50,000 cd/m² to 75,000 cd/m² at the surface of the image generator 10. Typically, the image generator unit 10, as seen in the figure, consists of a backlight source, backlight 13, some light control structures 16, not shown here in detail, like diffusers, brightness enhancement films, micro-lens arrays, but without being limited to these enumerated components, and a transmissive liquid crystal display 11, also referred to as LCD.

Given the description of one of the preferred embodiments for the state of the art HUD it is clear that the transmissive LCD has to operate with very large brightness levels. Compared to 150 cd/m² to 500 cd/m² employed for most other display applications, ranging from flat panel TVs to computer monitors, mobile phones or fully programable instrument clusters, it is evident that in HUD applications, the display panel must operate with brightness levels 50 to 200 times larger than typical applications. An important aspect for any active semiconductor device, such as the thin film transistors, also referred to as TFTs, employed in the construction of an LCD panel, is the photoinduced current, also named photocurrent, intrinsically produced when exposed semiconductor regions are subjected to light. The stronger the incident light, the larger will be the photocurrent induced on the semiconductor structure. This photocurrent is typically a parasitic effect in devices that are not designed to convert light into electricity as it affects the desired behaviour of the electrical components. For instance, if a TFT associated with a pixel is required to be kept in a blocked state in order to store the desired pixel voltage on the pixel's capacitance, the induced parasitic photocurrent can deplete the charge stored in the pixel and hence, the pixel transmittance will be altered. Furthermore, several of the materials and structures employed for the construction of the LCD may be sensitive to high intensity light level as this, for instance, combined with the electrical potential used to drive a pixel's transmittance, may break certain chemical bonds or may lead to a build-up of trapped charges in the dielectric materials used in the construction stack of the display. A high energy photon, for example a blue light photon, may hit an atom at the interface between a dielectric and a conductive or semiconductive material and impart sufficient energy such that an electron-hole pair is produced. Depending on the direction and magnitude of the electrical field applied to the pixel, the hole may recombine with an electron from the conductive material (contributing to the photoinduced current) while the electron is accelerated and then trapped inside the dielectric material. This electron trapping leads over time to the creation of a parasitic electrical field that interferes with the normal pixel operation.

These effects are more pronounced as more incident photons are available for the production of electron-hole pairs, i.e. the brighter the backlight source is. In typical LCD panel applications, since the light is a key system component without which the panel is not capable of generating images, the light sensitive parts must be protected using light shielding elements. Semiconductor elements susceptible to be affected by the photoinduced current are typically guarded by thin metal films deposited on the display substrate between the light source and the active components. However, since the LCDs that are typically used for HUD applications must operate at higher than typical brightness levels, they require some additional built-in measures to limit the amount of light that enters a pixel. Typically, besides the metal film light shields, the LCDs for HUD employ an additional black mask layer placed between the light source and the active parts. In HUD applications, the additional protection needed to reduce the photo-induced current consists typically of a black mask layer (i.e. a photo-opaque material) that is formed on the backside of the semiconductor elements constructed on the display surface. However, the mask layer cannot be formed as a continuous structure as light still needs to pass through the display pixels, so the mask must have apertures for each of the LCD's pixels. However, given the alignment tolerances between the black mask layer and the semiconductor structures, the openings in the black mask should be smaller than the pixels on the LCD panel, otherwise, in some circumstances, it may be possible that parts of the semiconductor structures are no longer shielded from the intense backlight. This effectively limits the amount of light that is able to exit the LCD panel towards the end user, limiting, in fact, the achievable maximum display brightness. In order to still allow for the required light levels, the HUD application must compensate this drop in brightness by increasing the intensity of the backlight unit, which, in turn, implies even more light that could induce photocurrents so more constraints are placed on the black mask layer. In the end, a compromise must be made between the degradation of the display transmittance as a result of the characteristics of the black mask and the amount of additional protection that can be provided for the light sensitive elements. Furthermore, the black mask layer is not capable of protecting the rest of the optically clear pixel structure from the intense light that enters the display which can lead, as detailed, to material degradation or trapped charges buildup in structures employed for the panel construction.

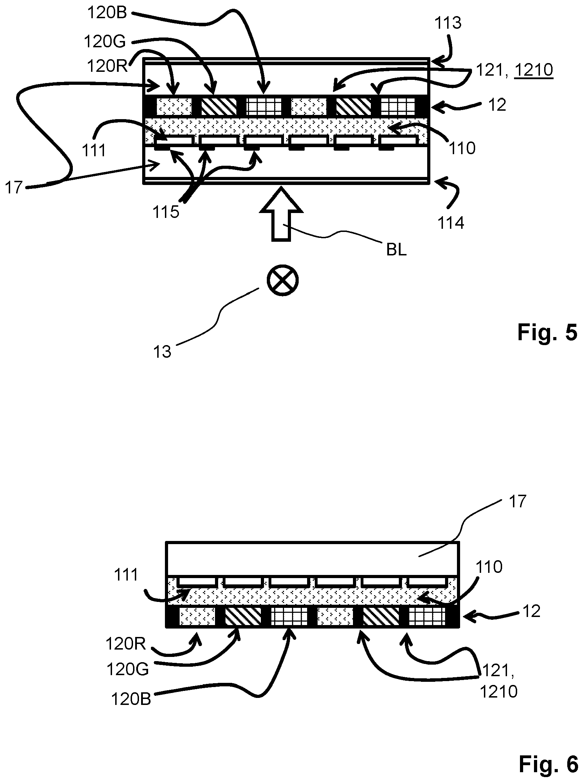

Fig. 5 shows a standard LCD (relative sizes not to scale). Assuming that all optical elements are ideal, the white backlight BL first passes through a light polarizing layer, the back polarizer 114, that selects only the light that has its polarization plane aligned with that required by the display. At this point, about 50% (a factor of 0.5) of the incoming unpolarized light is absorbed as its polarization plane is not aligned with the display polarizer.

After this, the remaining backlight passes a supporting structure 17 and enters the active pixel area, the liquid crystal layer 110. Pixel driving elements 111 a driven by a driver (not shown here) according to the data to be displayed. The pixel driving elements 111 cause the liquid crystal substance of the liquid crystal layer 110 to rotate polarisation depending on an applied signal. Critical parts of the pixel driving elements 111 are shielded by light shields 115 thus photoelectric currents are reduced. The polarization plane of the light passing the liquid crystal layer 110 will be modulated by the data to be displayed with the aid of the liquid crystal layer 110. After the modulation, the light passes through the colour filter 12 layer where it gets filtered so that only the required spectral components, i.e. red through colour filter element 120R, green through colour filter element 120G or blue through colour filter element 120B, may exit the display panel. At this point, about 70% (i.e. a factor of 0.7) of the light that is incident on the colour filter elements 120R, 120G, 120B gets absorbed, so only around 30% (that is a factor of 0.3) of the incoming modulated light may pass through. Additionally, the colour filter 12 layer also delimits the individual colour subpixels with the aid of a black opaque material of which pixel aperture walls 121 of a black matrix 1210 that separate the colour specific filter elements 120R, 120G, 120B. This sets in the end the pixel aperture ratio, that is, the ratio between the active pixel area and the total pixel area (typically around 0.6 to 0.8, or, in percent 60% to 80%) and further limits the amount of light that is capable of exiting the display.

Finally, the modulated and coloured light passes through another support structure 17 and enters another polarizer layer, the front polarizer 113, that transforms the light polarization variations induced by the liquid crystal layer 110 into brightness variations, resulting in the desired colour image. The display transmittance in the ideal case, where no other optical material induces losses may be estimated by multiplying the above factors resulting in around 50% x 30% x (60% to 80%) which is 9% to 12%. As a note, all subsequent descriptions will use a less detailed description of the display panel, invoking only layers that have an active role in the present invention. Additionally, the relative sizes of the involved elements are not necessarily drawn to scale.

From the previous description, starting from the observation that the colour filter layer of a standard LCD is one of the key elements that sets the total transmissivity of the entire assembly, one way according to the invention to limit the pixel light input without affecting the overall transfer function of the panel is to change the position of the colour filter 12. The direct way to achieve this result is by reversing the orientation of the display panel with respect to the backlight unit 13, as seen in Fig. 6.

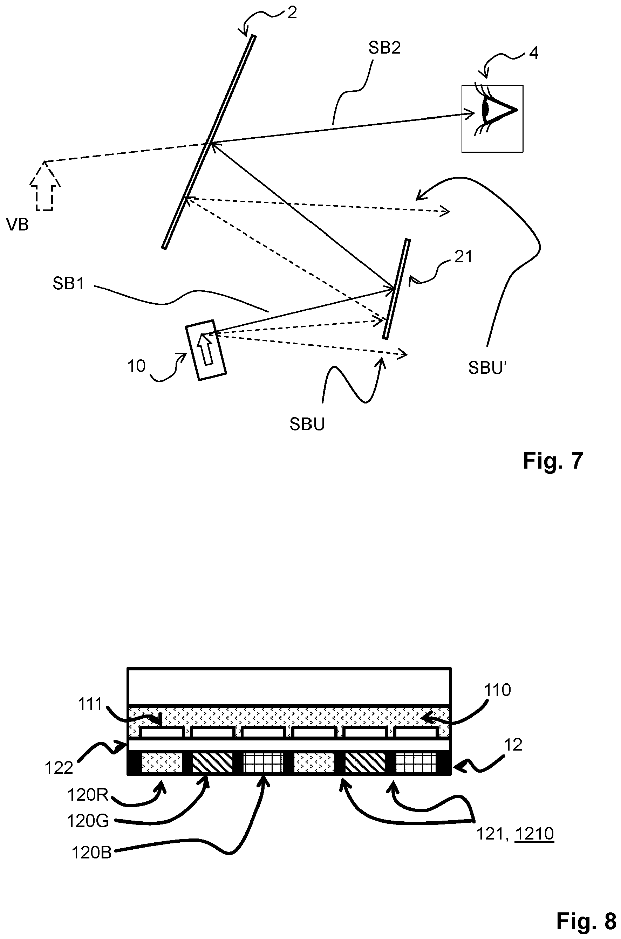

This modification is particularly useful in HUD applications as, by design, the backlight unit 13 outputs a highly collimated light. In HUD systems, without this strong collimation as diagrammatically shown in Fig.7, an important fraction, unused light SBU, SBU' of the modulated light exiting the front display surface will have a direction that is outside of the useful light cone of light SB1 and hence, it will not contribute to the resulting brightness of the virtual image, i.e. it will not be emitted towards the other optical elements of the system and it will not reach the end-user's eyes. Moreover, because of reflections inside the HUD unit, this out of cone light SBU, SBU' will decrease the overall optical performances of the system.

By having the colour filter 12 layer placed between the display's active components, the pixel driving elements 111 and the backlight unit 13, only around 30% of the light that passes the back polarizer 114 layer is able to enter the effective display structure. This is equivalent with around a three-fold decrease in the light that can have a negative impact inside the display compared with the standard solution. It should be clear to everyone skilled in the art that the final achievable brightness is equivalent with that of the state of art structure as the resulting display transmittance for the ideal case may still be calculated as the product of the same factors 50% (from the back polarizer) x 30% (from the colour filter transmittance) x 60% to 80% (from the pixel aperture ratio). Given the asymmetry of the display structure with respect to the top and back side surfaces, the display appearance is not typically the same when viewed from the top side or from the bottom side. Typically, since the bottom side surface carries the active pixel driving elements 111 composed of non-dielectric materials the bottom side will have a higher surface reflectance compared to the top side. Moreover, the surface may also present a colour hue, typically a yellowish tint. With this, turning around the display according to the present invention may lead to some side effects in the resulting HUD system. Because the display bottom side faces the upper side of the system, stray light that enters the optical path coming from the exterior of the HUD has higher chances of reflecting back from the display panel given its higher reflectivity, degrading the overall system performance. However, this effect can be easily countered with a modification in the construction of the display panel as seen in another embodiment of the invention shown in the following figure.

Fig. 8 shows the key difference between the standard display panel and the proposed one of this embodiment, namely the position of the colour filter 12. By having the colour filter disposed on the backside of the otherwise standard display, the system is still capable of reducing the light input into the active display regions. Additionally, since the pixel driving elements 111 are placed similarly with the state of the art applications on the backside of the display, they are not readily viewable from the front side of the display, minimizing the change in appearance compared with the first proposed solution.

As shown in Fig.8, a buffer layer 122 that separates the colour filter 12 layer and the pixel driving elements 111 of the active pixel driving structure may advantageously be applied. For instance, the resulting colour filter 12 surface may have properties that are not directly compatible with the process of deposition of the pixel driving elements 111. Typically, the thickness of this intermediate buffer layer 122 is much smaller than depicted in the figures.

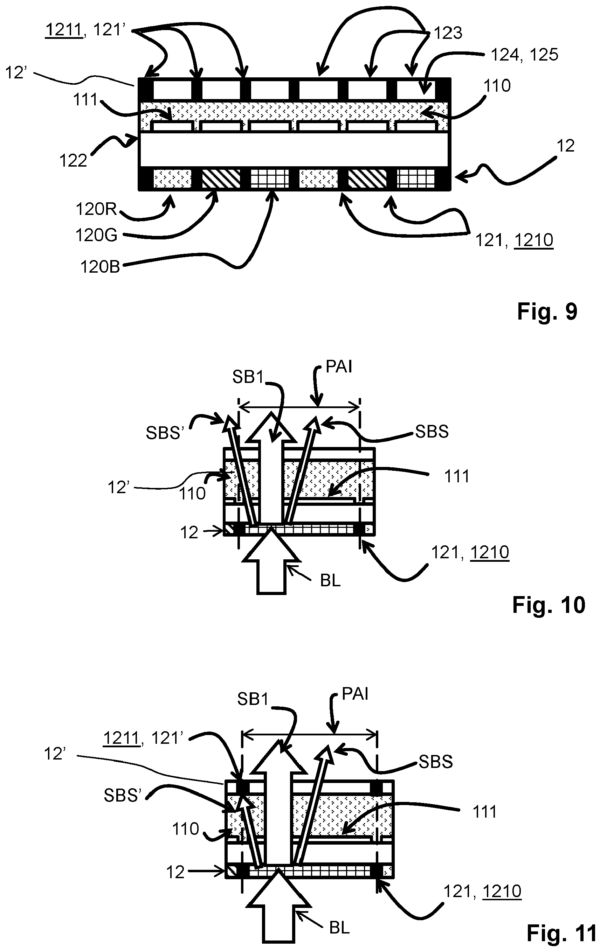

Fig. 9 shows another possible embodiment according to the present invention. Here, the colour filter 12 layer is placed at the bottom side of the display panel and, additionally, another layer 12' with clear pixel apertures 123 is placed on the top side of the display. This additional layer 12' uses the same processing steps typically employed for the creation of the standard colour filter 12 layer, with the exception that none of the pixel apertures 123 are filled with colour filtering materials. The presence of this layer 12' introduces several benefits for the proposed invention such as the aperture walls 121' create a firm boundary between adjacent pixels, they act like light shielding elements for stray light entering the front side of the display, for example sunlight, and further reduce the difference in the appearance of the front side of the display panel of the present invention disclosure compared with the state of the art displays.

As illustrated in Fig. 10, when placing the colour filter 12 layer on the bottom side of the display, some of the light BL that enters a pixel will get scattered by the materials inside the display panel. With this, it is possible that a fraction SBS, SBS' of the light that gets modulated by a pixel will exit the front side of the display through an area corresponding to an adjacent pixel, effectively leading to a cross-talk between different display pixels and thus degrading the system performance.

By having the additional aperture layer as shown in Fig. 11, it should be clear to everyone skilled in the art that the scattered light SBS' that otherwise will lead to cross-talk gets blocked by the pixel aperture walls 121' defined in the clear layer 12'.

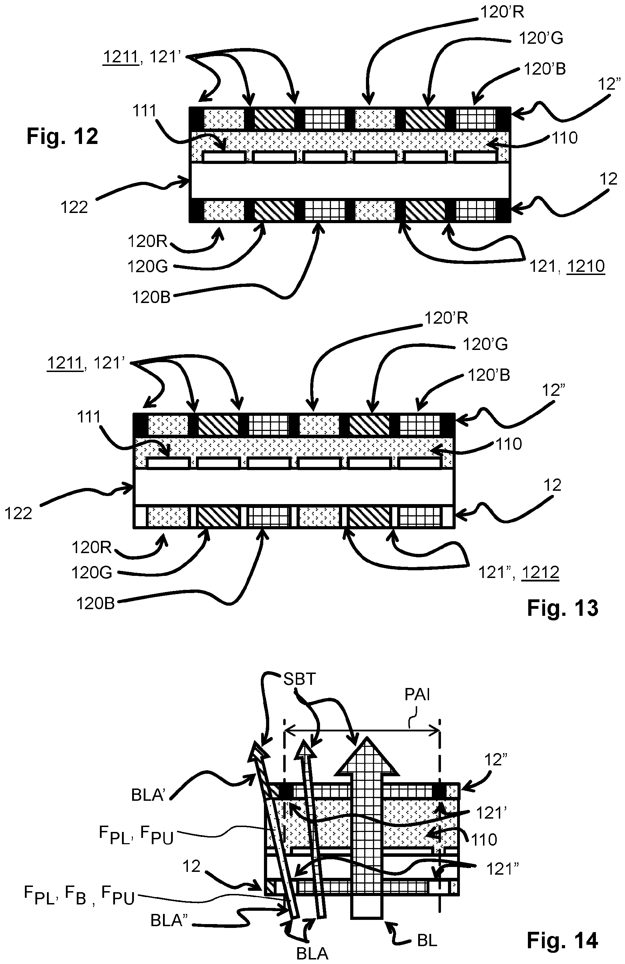

Fig. 12 shows another implementation according to the invention. It uses a double colour filter layer - one colour filter 12 that is disposed on the bottom side of the display panel according to the present invention and another colour filter 12" placed as in the state of the art applications. In this embodiment, the final colour saturation for each of the individual primary colours is determined by the combination of the two colour filter layers 12,12". With this, it is possible to create a balance between the light intensity reduction and the change in the appearance of the front side of the display.

Fig. 13 shows yet another implementation of the invention. This implementation uses the same approach with two colour filter 12,12" layers with the difference that the aperture walls 121" of the matrix 1212 of the bottom side colour filter 12 are created using an optically clear material. This has the advantage that part BLA" of the backlight BLA that falls at the boundary between two colour subpixels may still be properly modulated by the adjacent pixels and so will contribute to the final virtual image brightness, see Fig.14. This effectively increases the LCD panel's transmittance. Angled backlight BLA having a full frequency range F_{PL}, F_{B}. F_{PU} enters the colour filter 12. A part BLA" of the angled backlight BLA falls on a pixel aperture wall 121. The matrix 1212 comprising this pixel aperture wall 121 has an optical bandpass characteristic: Light of a lower passing frequency range F_{PL} and of an upper passing frequency range F_{PU} pass the matrix 1212, while light of a blocking frequency range F_{B} is blocked,

In other words, the present invention provides a way to limit the effects of high intensity backlight BL of HUD applications without negatively affecting the display transmittance. Advantages of the inventive solutions are for example: By having the colour filter 12 layer placed between the backlight unit 13 and the pixel driving structures it is possible to decrease by several times the amount of light that enters the active display driving elements 111 without, affecting the overall display transmittance. The main benefit resulting from the present invention is the reduction or elimination of the degrading effects in light sensitive materials, resulting in an improved long term system stability. For example, reduction of image burn-in effects, or preservation of the display contrast over time are reached. Additionally, by limiting the light input into the display panel, the requirements for the black mask layer typically used for light shielding in HUD applications may be relaxed and hence, a larger fraction of the backlight output contributes to the total display brightness, yielding a higher panel transmittance. By having a higher panel transmittance, the same overall HUD system performance may be achieved by having a lower backlight power than for the state of the art solutions and thus, the application of the present invention lowers further down the light that may have adverse effects on the display panel. The inventive solutions may also be used at near-eye displays, virtual / augmented reality head-sets, or head-up applications in nonautomotive fields.

Head-up displays require very bright backlight in order to generate a virtual image that is visible even under bright outside light conditions. Bright light causes leakage currents in electric circuit elements like thin film transistors in TFT-LCD devices. Leakage currents are usually prevented by shading elements arranged to shade electric circuit elements from bright backlight. The larger the shading the more backlight is blocked. A better use of backlight is desired. According to the invention, colour filters used in LCD devices are provided with a black matrix that shades border areas of filters of different colour. These colour filters are usually arranged downstream of the liquid-crystal layer. It is suggested to arrange the colour filter upstream the liquid-crystal layer and to align black matrix and electric circuit elements, thus replacing the shading elements. This has the advantage that less backlight is blocked.

## Claims

1. A head-up display unit (1), the head-up display unit (1) comprising:
- a picture generating unit (10) for creating an image to be displayed as a virtual image (VB) to a viewer; and
- an optical unit (14) for projecting the image to be displayed towards an eyebox (4);
the picture generating unit (10) comprising:
- a liquid crystal layer (110);
- a backlight unit (13) arranged upstream the liquid crystal layer (110);
- a colour filter (12) with a black matrix (1210) separating colour filter elements (120R, 120G, 120B);
wherein the colour filter (12) is arranged downstream the backlight unit (13) and upstream the liquid crystal layer (110).

2. The head-up display unit (1) according to claim 1, wherein the backlight unit (13) emits highly collimated light (BL).

3. The head-up display unit (1) according to claim 1 or 2, wherein the liquid crystal layer (110) is provided with pixel driving elements (111) arranged facing the colour filter (12).

4. The head-up display unit (1) according to any of claims 1 to 3, wherein the liquid crystal layer (110) and the colour filter (12) are separated by a thin buffer layer (122).

5. The head-up display unit (1) according to any of the preceding claims, wherein a black matrix structure (1211) is arranged downstream the liquid crystal layer (110), said black matrix structure (1211) being provided with pixel apertures (123).

6. The head-up display unit (1) according to claim 5, wherein the pixel apertures (123) are filled with at least one of an optically clear element (124) and a colour filter element (120R, 120G, 120B) and a polarizer element (125).

7. A head-up display unit (1), the head-up display unit (1) comprising:
- a picture generating unit (10) for creating an image to be displayed as a virtual image (VB) to a viewer; and
- an optical unit (14) for projecting the image to be displayed towards an eyebox (4);
the picture generating unit (10) comprising:
- a liquid crystal layer (110);
- a backlight unit (13) arranged upstream the liquid crystal layer (110);
- a colour filter (12) with a matrix (1212) separating colour filter elements (120R, 120G, 120B);
the matrix (1212) having an optical band-pass characteristic (F_{PL}, F_{B}, F_{PU}) blocking frequencies (F_{B}) that cause pixel driving elements (111) to malfunction and letting pass other frequencies (F_{PL}, F_{PU}).

8. A vehicle with a head-up display unit (1) according to any of claims 1 to 7 for generating an image for a user of the vehicle.
